# EUROPÄISCHE PATENTSCHRIFT

(11) **EP 3 772 596 B1**
(45) Veröffentlichungstag und Bekanntmachung des Hinweises auf die Patenterteilung: **03.11.2021**
(21) Anmeldenummer: 19190824.3
(22) Anmeldetag: 08.08.2019
(51) Int. Cl.: F15B 19/00, F15B 20/00, F16K 37/00

(54) **ANORDNUNG MIT AUF/ZU-VENTIL, PNEUMATISCHEM STELLANTRIEB, MAGNETVENTIL UND FUNKTIONSÜBERWACHUNGSEINRICHTUNG**
ARRANGEMENT COMPRISING AN OPEN/CLOSE VALVE, PNEUMATIC ACTUATOR, SOLENOID VALVE AND FUNCTION MONITORING DEVICE
AGENCEMENT POURVU DE SOUPAPE D'OUVERTURE / DE FERMETURE, DE SERVOMOTEUR PNEUMATIQUE, ÉLECTROVANNE ET DISPOSITIF DE SURVEILLANCE FONCTIONNEL

(43) Veröffentlichungstag der Anmeldung: 10.02.2021
(73) Patentinhaber: Siemens Aktiengesellschaft, 80333 München (DE)
(72) Erfinder: Barth, Johannes, 76228 Karlsruhe (DE); Götz, Ewa, 76137 Karlsruhe (DE); von Dosky, Stefan, 76149 Karlsruhe (DE)

(56) Entgegenhaltungen:
- EP-B1- 2 381 149
- WO-A1-2017/112918
- WO-A1-2018/075241

## Beschreibung

Die Erfindung betrifft eine Anordnung, die ein Feldgerät mit einem Auf/Zu-Ventil, einem pneumatischen Stellantrieb und einem Magnetventil und eine Funktionsüberwachungseinrichtung umfasst, wobei das Magnetventil bei elektrischer Ansteuerung den Stellantrieb mit Druckluft beaufschlagt und bei Nichtansteuerung entlüftet, wobei der Stellantrieb das Auf/Zu-Ventil bei der Beaufschlagung mit Druckluft in eine der Auf/Zu-Stellungen und bei Entlüftung in die andere der Auf/Zu-Stellungen bewegt und wobei die Funktionsüberwachungseinrichtung dazu ausgebildet ist, mindestens einen für die Bewegung des Auf/ Zu-Ventils bezeichnenden Parameter zu erfassen.

Ein derartige Anordnung ist aus der EP 2 381 149 B1 bekannt, wobei die Funktionsüberwachungseinrichtung Bestandteil des Feldgerätes ist.

Auf/Zu-Ventile oder Schaltventile mit zwei fest definierten Schaltzuständen (häufig: 100% geöffnet und komplett geschlossen) werden in der Prozessindustrie benötigt, um ein Medium durchzulassen oder abzusperren, und erfüllen dabei in vielen Fällen sicherheitsrelevante Aufgaben. Bei den bekannten Anordnungen wird das Auf/Zu-Ventil mittels eines pneumatischen Stellantriebs entweder in eine Betriebsstellung, z. B. "auf", oder eine Sicherheitsstellung, z. B. "zu", gebracht. Ein Magnetventil (Vorsteuerventil), das mit einer von einem Leitsystem gelieferten Steuerspannung angesteuert wird, verbindet den Stellantrieb mit einer Druckluftversorgung. Bei Spannungsausfall oder wenn in einem Notfall die Steuerspannung abgeschaltet wird, wird der pneumatische Stellantrieb über das Magnetventil entlüftet, so dass das Auf/Zu-Ventil aus der Betriebsstellung in die Sicherheitsstellung bewegt wird. Je nach Bauart des Auf/Zu-Ventils kann der Stellantrieb als Linearantrieb oder Drehantrieb ausgebildet sein.

Bei dem aus der oben erwähnten EP 2 381 149 B1 bekannten Feldgerät umfasst die Funktionsüberwachungseinrichtung einen Drucksensor zum Erfassen des Zeitverlaufs des in der Arbeitskammer des Stellantriebs herrschenden pneumatischen Arbeitsdrucks bzw. des am Magnetventil abgegebenen pneumatischen Steuerdrucks. Anhand einer erfassten Druckänderung in dem Zeitverlauf sowie anhand von Druckänderungs-Erfahrungswerten wird eine physikalische Verfahrgröße wie die Stellung, die Verfahrzeit oder der Stellweg des Auf/Zu-Ventils bestimmt. Es wird ein Fehlersignal erzeugt, wenn der Ist-Druckverlauf oder Ist-Druckänderungsverlauf von einem Soll-Druckverlauf bzw. Soll-Druckänderungsverlauf des fehlerfrei arbeitenden Auf/Zu-Ventils bei Überschreitung einer vorbestimmten Toleranz abweicht.

Die Erfassung des Zeitverlaufs des pneumatischen Drucks und insbesondere die Funktionsdiagnose des Auf/Zu-Ventils können dann initiiert werden, wenn eine Druckänderung, insbesondere ein Druckabfall und/oder ein Druckanstieg, erfasst wird.

Feldgeräte mit Auf/Zu-Ventil, pneumatischem Stellantrieb, Magnetventil und Funktionsüberwachungseinrichtung sind auch aus der DE 10 2007 034 059 B4, DE 10 2007 034 060 B4, DE 10 2007 022 762 B4, DE 10 2009 006 533 B4, DE 10 2007 020 597 A1 oder DE 10 2007 016 817 A1 bekannt.

Bei diesen bekannten Anordnungen dient die Funktionsüberwachungseinrichtung dazu, die Funktionsfähigkeit des Stellantriebs im Rahmen eines Teilhubtests (Partial-Stroke-Test) zu überprüfen.

Dazu kann z. B. ein zusätzlicher elektropneumatischer Stellungsregler an dem Stellantrieb angebaut sein. Bei dem Partial-Stroke-Test wird das Auf/Zu-Ventil mittels des Stellungsreglers aus der Betriebsstellung über einen Teil seines Stellweges in Richtung der Sicherheitsstellung bewegt und anschließend wieder zurückbewegt. Die Stellungsänderung ist dabei so gering, dass der laufende Betrieb der Anlage, in der das Auf/Zu-Ventil eingebaut ist, nicht unterbrochen werden muss und nur unwesentlich gestört wird. Der Stellungsregler weist einen Positionssensor auf, um die Stellbewegung während des Partial-Stroke-Tests zu erfassen und anschließend abzuspeichern und/oder auszuwerten. Die Stellbewegung kann natürlich auch außerhalb des Partial-Stroke-Tests erfasst und ausgewertet werden, wenn das Auf/Zu-Ventil betriebsmäßig, im Rahmen eines Vollhubtests oder im Notfall geschlossen wird. Dabei können durch den Stellungsregler weitere, für die Bewegung des Stellantriebs bezeichnende Parameter, wie z. B. der Zuluftdruck, erfasst und ausgewertet werden. Das Vorsehen eines Stellungsreglers nur für den Partial-Stroke-Test ist jedoch sowohl in materieller als auch finanzieller Hinsicht ein hoher Aufwand.

Bei der aus der oben genannten DE 10 2007 034 059 B4 bekannten Anordnung kommt die Funktionsüberwachungseinrichtung ohne einen Stellungsregler aus, jedoch ist die Funktionsüberwachung des Stellantriebs auf den Partial-Stroke-Test beschränkt.

Pneumatisch angetriebene Feldgeräte mit Auf/Zu-Ventilen sind in den meisten Fällen weder mit einem Stellungsregler ausgestattet, noch verfügen sie über eine eigene Funktionsüberwachungseinrichtung vergleichbar der aus der EP 2 381 149 B1. Sie haben typischerweise lange Wartungsintervalle und abgesehen vom optionalen Endlagenschaltern keine Sensoren für eine über den Partial-Stroke-Test hinausgehende Funktionsüberwachung. Daher kann man z. B. nicht erkennen, ob das Auf/Zu-Ventil vollständig geschlossen ist, sondern immer nur, ob der Stellantrieb die gewünschte Position erreicht hat oder nicht. Es handelt sich also lediglich um eine indirekte Rückmeldung. Aussagen über das Schließvermögen des Auf/Zu-Ventils oder die noch zur Verfügung stehende Kraft- bzw. Drehmomentreserve des Stellantriebs lassen sich auf diese Art und Weise nicht treffen. Typische Alterungserscheinungen, wie eine durch Korrosion schwergängigere Antriebswelle, eines nachlassenden Antriebsmomentes auf Grund einer Federermüdung oder einer Leckage im Antrieb sowie z. B. Anbackungen im Auf/Zu-Ventil lassen sich nicht erkennen.

Üblicherweise werden daher die Ventile zur Wartung aus der Prozessanlage ausgebaut und in einer Werkstatt untersucht. Weiterhin sind mobile Messkoffer bekannt, mit denen und entsprechender Sensorik für Druck und Weg der Schaltvorgang, also das Öffnen und Schließen des pneumatisch angetriebenen Auf/Zu-Ventils, aufgezeichnet werden kann.

Der Erfindung liegt daher die Aufgabe zugrunde, eine Funktionsüberwachungseinrichtung für ein Feldgerät mit pneumatisch angetriebenem Auf/Zu-Ventil anzugeben, die möglichst wenig Energie benötigt und nachträglich an dem Feldgerät angeordnet werden kann, ohne aus diesem stromversorgt werden zu müssen. Gemäß der Erfindung wird die Aufgabe dadurch gelöst, das bei der Anordnung der eingangs angegebenen Art die Funktionsüberwachungseinrichtung einen Veränderungen eines Magnetfeldes erfassenden Magnetfeldsensor aufweist, der im Bereich des Magnetventils zur Erfassung der Veränderung des Magnetfelds des Magnetventils angeordnet ist und ein die Funktionsüberwachungseinrichtung zur Erfassung des mindestens einen Parameters aufweckendes Signal erzeugt.

Bei der erfindungsgemäßen Anordnung wird die Funktionsüberwachung dann angestoßen oder getriggert, wenn das Magnetventil aktiviert oder deaktiviert wird, was anhand der Änderung des Magnetfeldes detektiert wird. Magnetfeldsensoren sind in sehr unterschiedlichen Ausführungen als elektromechanische Reedkontakte, Induktionsspulen oder elektronische Magnetschalter mit magnetoresistiven oder Hall-Elementen bekannt und benötigen für ihre Funktion keine Hilfsenergie, wie z. B. im Falle von Reedkontakten oder Induktionsspulen, oder zeichnen sich wie im Falle von elektronischen Magnetschaltern durch eine sehr geringe Energieaufnahme aus. In jedem Fall ist die Energieaufnahme geringer, als bei der aus der oben erwähnten EP 2 381 149 B1 bekannten Dauerüberwachung des Drucks. Das Triggern durch einen schnellen Magnetfeldschalter hat weiterhin den Vorteil, dass stets zunächst der Speiseluftdruck (der Haltedruck des Antriebs) gemessen wird. Die Drucktransiente beim Schalten des Magnetventils enthält bereits Informationen über den Zustand des Magnetventils. Danach und mit abfallendem Druck im Antrieb beginnt erst die Bewegung des Antriebs. Somit können nacheinander zuerst das Magnetventil und dann der Antrieb gemessen und überwacht werden. Außerdem ist es nicht zwingend erforderlich, dass der Stellantrieb über einen Drucksensor verfügt. So kann die Funktionsüberwachungseinrichtung einen Vibrationssensor umfassen, der zusätzlich oder alternativ zu dem pneumatischen Stelldruck Vibrationen des Feldgeräts als den für die Bewegung des Auf/Zu-Ventils bezeichnenden Parameter erfasst. In diesem Fall ist die Funktionsüberwachungseinrichtung von dem zu überwachenden Feldgerät unabhängig, so dass sie als separates eigenversorgtes Gerät ausgebildet sein kann, das lösbar an dem Auf/Zu-Ventil oder dem pneumatischen Stellantrieb montiert werden kann. Die Eigenversorgung kann durch Batterie oder eine Solarzelle erfolgen.

Die Funktionsüberwachungseinrichtung kann als Datenlogger ausgebildet sein, in dem die nach Triggerung der Funktionsüberwachung für eine vorgegebene Zeit erfassten Messwerte des Parameters (z. B. Stelldruck und/oder Vibrationen) gespeichert werden. Die gespeicherten Messwerte können bei Bedarf ausgelesen, insbesondere über eine Funkschnittstelle an eine entfernte Stelle zur Auswertung übertragen werden. So können die Messdaten an ein mobiles Kommunikationsendgerät oder mittels eines Gateways in eine Cloud übertragen und dort ausgewertet werden. Die Auswertung kann alternativ auch an Ort und Stelle in der Funktionsüberwachungseinrichtung erfolgen, wobei dann die Ergebnisse der Auswertung an eine entfernte Stelle übertragen werden.

Im Weiteren wird die Erfindung anhand von Ausführungsbeispielen und unter Bezugnahme auf die Figuren der Zeichnung erläutert; im Einzelnen zeigen:
- Fig. 1: ein erstes Ausführungsbeispiel der erfindungsgemäßen Anordnung mit Auf/Zu-Ventil, pneumatischem Stellantrieb, Magnetventil und Funktionsüberwachungseinrichtung,
- Fig. 2: ein zweites Ausführungsbeispiel der erfindungsgemäßen Anordnung,
- Fig. 3: ein drittes Ausführungsbeispiel der erfindungsgemäßen Anordnung,
- Fig. 4: ein Ausführungsbeispiel der Funktionsüberwachungseinrichtung,
- Fig. 5: ein Beispiel für verrauschte Vibrationsmessdaten eines von einem Fluid durchströmten Ventils,
- Fig. 6: ein Beispiel für die Vibrationsmessdaten bei ruhendem Fluid und
- Fig. 7: ein Beispiel für die verrauschten Vibrationsmessdaten nach Bandpassfilterung.

Gleiche Bezugszeichen haben in den verschiedenen Figuren die gleiche Bedeutung. Die Darstellungen sind rein schematisch und repräsentieren keine Größenverhältnisse.

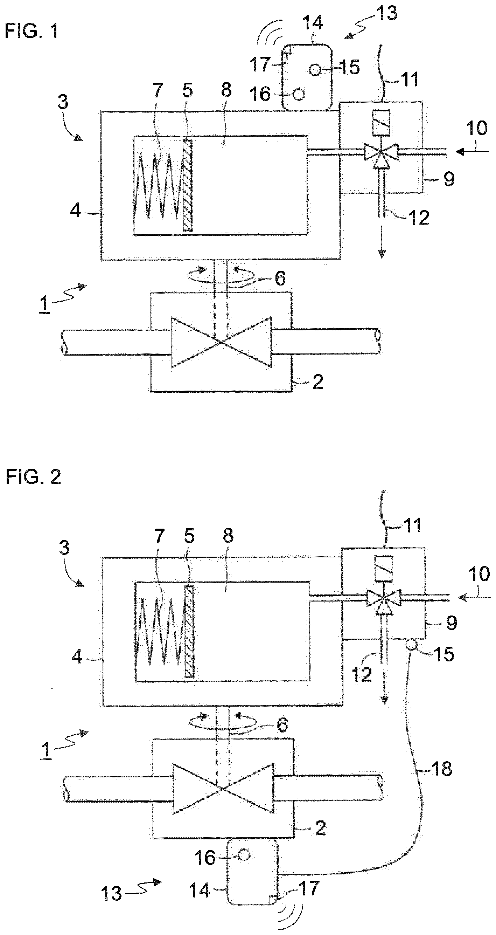

Fig. 1 zeigt ein Feldgerät 1 mit einem Auf/Zu-Ventil 2, das mittels eines pneumatischen Stellantriebs 3 in eine Auf- oder Zu-Stellung gebracht werden kann. Der pneumatische Stellantrieb 3 weist ein Antriebsgehäuse 4 auf, in dem ein Antriebselement 5, beispielsweise ein Kolben oder eine Membran, beweglich angeordnet ist, das über ein Stellelement 6 auf das Auf/Zu-Ventil 2 wirkt. Je nach Bauart des Auf/Zu-Ventils 2 kann es sich bei dem Stellantrieb 3 um einen Linear- oder Hubantrieb mit einer das Stellelement 6 bildenden Hubstange oder, wie hier gezeigt, um einen Rotations- oder Schwenkantrieb mit einer Drehwelle als Stellelement 6 handeln. Das Antriebselement 5 ist auf einer Seite durch eine Druckfeder 7 und auf der anderen Seite durch einen der Druckfeder 7 entgegengesetzt wirkenden pneumatischen Druck in einer Druckkammer 8 belastet. An dem Antriebsgehäuse 4 ist ein Magnetventil 9 angebaut, über das die Druckkammer 8 entweder mit Druckluft 10 aus einer hier nicht gezeigten Druckluftquelle versorgt oder entlüftet werden kann. Das Magnetventil 9 ist hier als Dreiwegeventil ausgebildet und erhält über eine Ansteuerleitung 11 eine Versorgungsspannung von beispielsweise 24 V. Die Versorgungsspannung kann von einer hier nicht gezeigten leittechnischen Einrichtung bereitgestellt werden und ist im Normalfall eingeschaltet, so dass das Magnetventil 9 aktiviert ist und die Druckkammer 8 mit der Druckluft 10 verbindet. Aufgrund der Druckluftbeaufschlagung des Antriebselements 5 wird das Auf-Zu-Ventil 2 in eine Betriebsstellung, z. B. "auf", gebracht und in dieser Stellung gehalten. Im Notfall schaltet die leittechnische Einrichtung die Versorgungsspannung ab, so dass das dann deaktivierte Magnetventil 9 die Druckkammer 8 von der Druckluftversorgung trennt und stattdessen über einen Auslass 12 entlüftet. Der Stellantrieb 3 wird daraufhin drucklos und bewegt das Auf-Zu-Ventil 2 unter Einwirkung der Druckfeder 7 in eine Sicherheitsposition, z. B. "zu". Das Ein- und Ausschalten der Versorgungsspannung kann auch betriebsmäßig erfolgen, um das Auf-Zu-Ventil 2 in die eine oder andere Position zu bringen.

Eine Funktionsüberwachungseinrichtung 13, die hier in Form eines eigenständigen Geräts mit einem Gerätegehäuse 14 realisiert ist, ist an einer geeigneten Stelle an dem Feldgerät 1, hier z. B. an dem Antriebsgehäuse 4 des Stellantriebs 3, montiert. Die Montage kann über Schrauben, Klemmen oder einen Befestigungsmagneten erfolgen. Die Funktionsüberwachungseinrichtung 13 umfasst unter anderem einen Magnetfeldsensor 15, einen Vibrationssensor (Beschleunigungssensor, Körperschallsensor) 16 und ein Funkmodul 17. Der Magnetfeldsensor 15 dient dazu, Änderungen des von dem Magnetventil 9 erzeugten Magnetfelds zu erfassen und auf diese Weise zu detektieren, wenn das Magnetventil 9 aufgrund einer Abschaltung oder eines Ausfalls der Versorgungsspannung deaktiviert wird oder durch Einschalten der Versorgungsspannung wieder aktiviert wird. Für die Überwachung des Magnetventils 9 benötigt der Magnetfeldsensor 15 keine oder nur eine sehr geringe Hilfsenergie. Die auf die Deaktivierung oder Aktivierung des Magnetventils 9 folgende Bewegung des Auf/Zu-Ventils 2 wird anhand von Vibrationen des Feldgeräts 1 überwacht, die von dem Vibrationssensor 16 erfasst werden. Die Erfassung der Vibrationen und ihre Auswertung und/oder Speicherung in der Funktionsüberwachungseinrichtung 13 ist auf einen vorgegebenen Zeitraum von beispielsweise 5 Sekunden nach der Detektion der Deaktivierung oder Aktivierung des Magnetventils 9 beschränkt und wird durch ein entsprechendes Signal des Magnetfeldsensors 15 angestoßen. Der Energieverbrauch der Funktionsüberwachungseinrichtung 13 ist daher gering und kann beispielsweise durch eine Fotozelle oder eine Batterie gedeckt werden. Die erfassten Vibrationen können als Rohdaten unmittelbar in der Funktionsüberwachungseinrichtung 13 abgespeichert werden, um sie bei Bedarf über eine geeignete drahtgebundene Schnittstelle oder die Funkschnittstelle des Funkmoduls 17 auszulesen und extern auszuwerten. Sie können aber auch in der Funktionsüberwachungseinrichtung 13 ausgewertet und anschließend abgespeichert werden. Das Funkmodul 17 ermöglicht eine drahtlose Übertragung der abgespeicherten Daten an eine externe Stelle.

Bei dem in Fig. 1 gezeigten Beispiel ist die Funktionsüberwachungseinrichtung 13 auf dem Antriebsgehäuse 4 des Stellantriebs 3 in der Nähe zu dem Magnetventil 9 montiert.

Fig. 2 zeigt ein weiteres Beispiel, bei dem die Funktionsüberwachungseinrichtung 13 an dem Auf/Zu-Ventil 2 befestigt ist. Der Magnetfeldsensor 15 ist hier außerhalb des Gerätegehäuses 14 der Funktionsüberwachungseinrichtung 13 an dem Magnetventil 9 angeordnet und über eine Leitung 18 mit der der Funktionsüberwachungseinrichtung 13 verbunden.

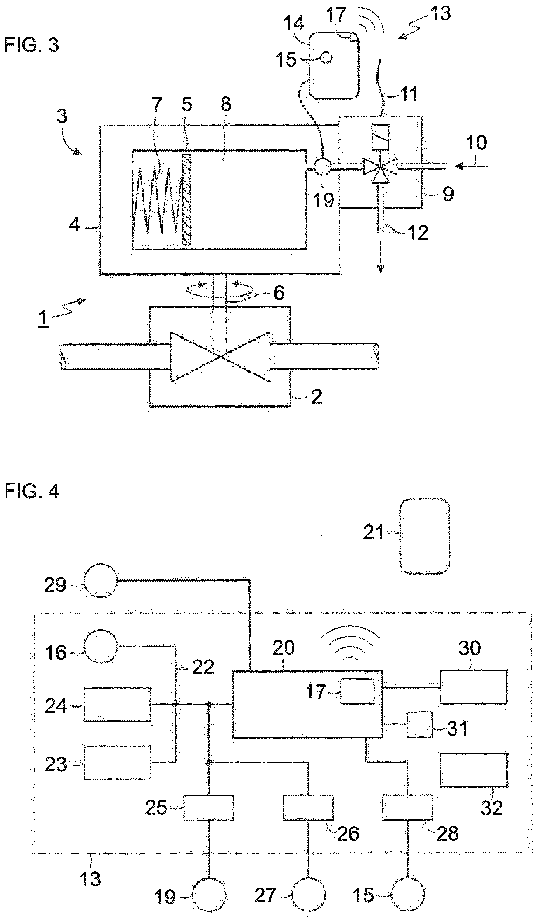

Fig. 3 zeigt ein Ausführungsbeispiel der erfindungsgemäßen Anordnung, bei dem anstelle des Vibrationssensors 16 ein Drucksensor 19 vorgesehen ist, um die auf die Deaktivierung oder Aktivierung des Magnetventils 9 folgende Bewegung des Auf/Zu-Ventils 2 zu überwachen. Der Drucksensor 19 ist Bestandteil des Stellantriebs 3 und erfasst den pneumatischen Steuerdruck. Die Erfassung des Steuerdrucks und seine Auswertung und/oder Speicherung in der Funktionsüberwachungseinrichtung 13 wird durch das Signal des Magnetfeldsensors 15 angestoßen.

Fig. 4 zeigt ein Ausführungsbeispiel der Funktionsüberwachungseinrichtung 13 in Form eines Blockschaltbildes. Die Funktionsüberwachungseinrichtung 13 enthält einen stromsparenden Mikrocontroller 20, in dem das bei dem hier gezeigten Beispiel für kurzreichweitige Funkverbindungen (z. B. Bluetooth, WPAN)ausgelegte Funkmodul 17 integriert sein kann. Als Empfänger für die von der Funktionsüberwachungseinrichtung 13 übertragenen bzw. aus ihr ausgelesenen Daten kommt z. B. ein mobiles Kommunikationsendgerät 21 wie ein Smartphone, Tabletcomputer oder Laptop in Betracht, in dem die Daten ggf. ausgewertet werden können oder mit denen diese Daten an eine entfernte Stelle, z. B. einen lokalen Server oder einen Cloud-Server, weitergeleitet werden können.

An dem Mikrocontroller 20 sind über ein Bussystem 22 ein RAM-Speicher 23, ein Flash-Speicher 24, der Vibrationssensor 16, Ports 25, 26 für externe analoge oder digitale Sensoren, wie z. B. den externen Drucksensor 19 (Fig. 3) oder einen, z. B. magnetoresistiven, Positions- oder Drehwinkelsensor 27 zur Erfassung einer Hub- oder Drehwinkelposition des Stellelements 6 (Fig. 1-3). Über einen Triggerport 28 kann der externe Magnetfeldsensor 15 (Fig. 2) an einem Triggereingang des Mikrocontrollers 20 angeschlossen werden. Alternativ ist der Magnetfeldsensor 15, wie in Fig. 1 oder 3 gezeigt, in dem Gehäuse 14 der Funktionsüberwachungseinrichtung 13 angeordnet und dort direkt mit dem Triggereingang des Mikrocontrollers 20 verbunden. Bei dem Magnetfeldsensor 15 handelt es sich z. B. um einen Magnetschalter. An dem Mikrocontroller 20 kann ferner ein PDM-Mikrofon (Pulse Density Modulation) 29 angeschlossen werden.

Die Funktionsüberwachungseinrichtung 13 verfügt über eine LED-Anzeige 30, eine Echtzeituhr 31 und eine interne Batterie 32 zur Stromversorgung der elektrischen und elektronischen Komponenten der Funktionsüberwachungseinrichtung 13. Die Energieversorgung kann alternativ durch die Versorgungsspannung des Magnetventils 9 erfolgen.

Um eine möglichst hohe Batterielebensdauer zu gewährleisten befindet sich die Funktionsüberwachungseinrichtung 13 die meiste Zeit in einem Ruhemodus, in dem nahezu keine Energie verbraucht wird. Während dieser Zeit wird der Magnetschalter 15 überwacht, und die Echtzeituhr 31 arbeitet, um einem eintretenden Ereignis ein eindeutiges Datum zuweisen zu können. Ferner wird in regelmäßigen Zeitabständen, z. B. alle 10 Sekunden, ein Bluetooth Low Energy Advertising durchgeführt. Sobald das Magnetventil 9 schaltet, löst der Magnetschalter 15 aus und versetzt die Funktionsüberwachungseinrichtung 13 aus dem Ruhemodus in einen Messmodus. Während eines vorgegebenen Zeitintervalls von beispielsweise 5 Sekunden werden Daten des Vibrationssensors 16 mit hoher Datenrate in dem RAM-Speicher 23 gespeichert. Gleichzeitig können auch Daten der anderen Sensoren 19, 27, 29, soweit sie verfügbar sind, ggf. mit niedrigerer Datenrate aufgenommen und abgespeichert werden. Wenn der Stellantrieb 3, wie in Fig. 3 gezeigt, einen Drucksensor 19 enthält, kann auf die Aufnahme von Vibrationen verzichtet werden. Der Beginn der Datenaufnahme erhält einen Zeitstempel durch die Echtzeituhr 31. Nach einem Mess- bzw. Aufnahmezyklus werden die Rohdaten aus dem RAM-Speicher 23 in den Flash-Speicher 24 kopiert. Danach geht die Funktionsüberwachungseinrichtung 13 wieder in den Ruhemodus über.

Die Datensätze aus mehreren Messungen können in dem Flash-Speicher 24 gespeichert werden, um z. B. bei Bedarf oder auf Anforderung über die Funkschnittstelle des Funkmoduls 17 auf das mobile Kommunikationsendgerät 21 oder mittels eines Gateways in eine Cloud übertragen werden. Dort können dann die Rohdaten ausgewertet bzw. weiterverarbeitet werden. Grundsätzlich ist aber die Auswertung oder Weiterverarbeitung auch durch den Mikrocontroller 20 möglich, was aber mit einem höheren Energieverbrauch in der Funktionsüberwachungseinrichtung 13 verbunden ist. Die Auswertung oder Weiterverarbeitung kann beispielsweise darin bestehen, dass die aufgenommenen Messdatenverläufe mit Gutverläufen verglichen werden, die bei der Inbetriebnahme des intakten Ventils 2 aufgenommen wurden.

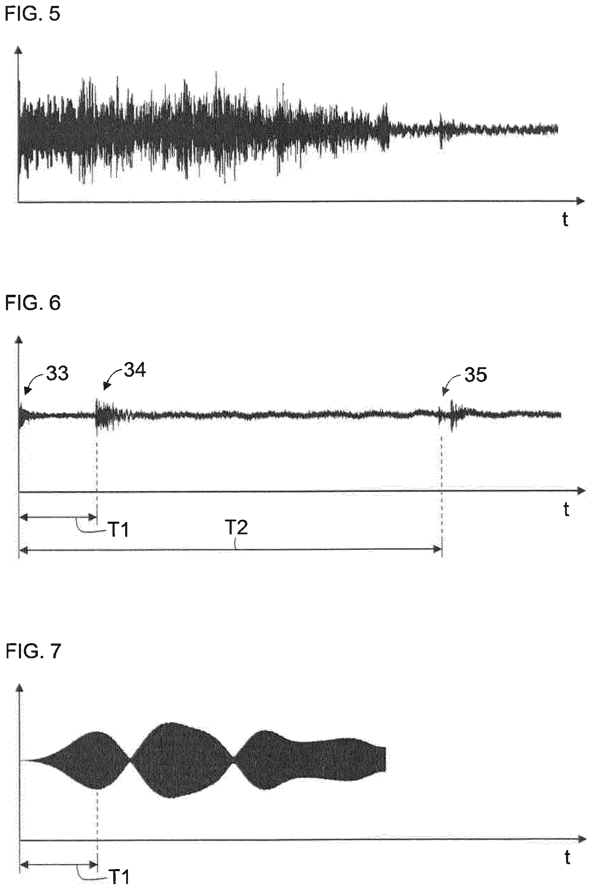

Fig. 5 zeigt beispielhaft die aufgenommenen Vibrationsmessdaten über die Zeit t, wenn ein Fluid durch das Ventil 2 gepumpt wird, wobei sich das Strömungsgeräusch sukzessive vermindert bis das Ventil 2 geschlossen ist und kein Medium mehr fließt. Fig. 6 zeigt die Vibrationsmessdaten bei ruhendem Fluid. Im Falle des ruhenden Fluids mit wenig störenden Geräuschen und Vibrationen sind drei eindeutig erkennbare Merkmale 33, 34, 35 auszumachen. Die Zeit T1 zwischen dem ersten 33 und zweiten Merkmal 34 repräsentiert die verstrichene Zeit zwischen Start der Druckbeaufschlagung des Stellantriebs 3 und dem Moment, ab dem der Antrieb 3 sich zu bewegen beginnt, auch Losbrechmoment genannt. Das dritte Merkmal 35 zeigt den Moment, bei dem der Schließkörper des Ventils 2 in den Ventilsitz eindringt. Damit erhält man 2 bzw. 3 Kenngrößen mit denen sich Aussagen über den Zustand des Antriebes 3 bzw. des Prozessventils 2 treffen lassen. Ändern sich diese Zeiten T1 und T2, so hat sich auch das Absperrvermögen nachteilig verändert.

Bei den in Fig. 5 gezeigten verrauschten Vibrationsmessdaten kann die Zeit T1 beispielsweise dadurch ermittelt werden, dass zunächst mittels Fast Fourier Transformation in den Vibrationsmessdaten ein charakteristischer Frequenzpeak ermittelt wird. Anschließend werden die Vibrationsmessdaten um den ermittelten Frequenzpeak bandpassgefiltert. Fig. 7 zeigt die so gefilterten Vibrationsmessdaten in denen die Zeit T1 bis zum Losbrechen des Ventils 2 detektiert werden kann. Die Zeit T2 kann dagegen ohne Weiteres aus den ungefilterten Vibrationsmessdaten ermittelt werden, weil das Ventil zu diesem Zeitpunkt vollständig geschlossen ist, so dass es keinen Durchfluss mit entsprechendem Rauschen in den Vibrationsmessdaten gibt.

## Patentansprüche

1. Anordnung umfassend ein Feldgerät (1) mit einem Auf/Zu-Ventil (2), einem pneumatischen Stellantrieb (3) und einem Magnetventil (9) und eine Funktionsüberwachungseinrichtung (13),
wobei das Magnetventil (9) bei elektrischer Ansteuerung den Stellantrieb (3) mit Druckluft (10) beaufschlagt und bei Nichtansteuerung entlüftet,
wobei der Stellantrieb (3) das Auf/Zu-Ventil (2) bei der Beaufschlagung mit Druckluft (10) in eine der Auf/Zu-Stellungen und bei Entlüftung in die andere der Auf/Zu-Stellungen bewegt und
wobei die Funktionsüberwachungseinrichtung (13) dazu ausgebildet ist, mindestens einen für die Bewegung des Auf/Zu-Ventils (2) bezeichnenden Parameter zu erfassen,
**dadurch gekennzeichnet, dass** die Funktionsüberwachungseinrichtung (13) einen Veränderungen eines Magnetfeldes erfassenden Magnetfeldsensor (15) aufweist, der im Bereich des Magnetventils (9) zur Erfassung der Veränderung des Magnetfelds des Magnetventils (9)
angeordnet ist und ein die Funktionsüberwachungseinrichtung (13) zur Erfassung des mindestens einen Parameters aufweckendes Signal erzeugt.

2. Anordnung nach Anspruch 1, **dadurch gekennzeichnet, dass** die Funktionsüberwachungseinrichtung (13) einen Drucksensor (19) umfasst, der den pneumatischen Druck in dem Stellantrieb (3) als den für die Bewegung des Auf/Zu-Ventils (2) bezeichnenden Parameter erfasst.

3. Anordnung nach Anspruch 1 oder 2, **dadurch gekennzeichnet, dass** die Funktionsüberwachungseinrichtung (13) einen Vibrationssensor (16) umfasst, der Vibrationen des Feldgeräts (1) als den für die Bewegung des Auf/Zu-Ventils (2) bezeichnenden Parameter erfasst.

4. Anordnung nach einem der vorangehenden Ansprüche, **dadurch gekennzeichnet, dass** die Funktionsüberwachungseinrichtung (13) Mittel (23, 24) zum Speichern von Messwerten des erfassten Parameters und Mittel, insbesondere eine Funkschnittstelle (17), zur Übertragung der Messwerte an eine entfernte Stelle (21) aufweist.

5. Anordnung nach Anspruch 4, **dadurch gekennzeichnet, dass** die entfernte Stelle zur Auswertung der Messwerte des erfassten Parameters ausgebildet ist.

6. Anordnung nach einem der Ansprüche 1 bis 3, **dadurch gekennzeichnet, dass** die Funktionsüberwachungseinrichtung (13) Mittel (20) zur Auswertung von Messwerten des erfassten Parameters und Mittel, insbesondere eine Funkschnittstelle (17), zur Übertragung des Ergebnisses der Auswertung an eine entfernte Stelle (21) aufweist.

7. Anordnung nach einem der vorangehenden Ansprüche, **dadurch gekennzeichnet, dass** die Funktionsüberwachungseinrichtung (13) Mittel zur Eigenversorgung, insbesondere eine Batterie (32) oder Solarzelle aufweist.

8. Anordnung nach einem der vorangehenden Ansprüche, **dadurch gekennzeichnet, dass** die Funktionsüberwachungseinrichtung (13) ein Gehäuse (14) zur lösbaren Montage an dem Auf/Zu-Ventil (2) oder pneumatischen Stellantrieb (3) aufweist.

## Claims

1. Arrangement comprising a field device (1) with an on/off valve (2), a pneumatic actuator (3) and a magnetic valve (9) and a function monitoring device (13),
wherein the magnetic valve (9) applies compressed air (10) to the actuator (3) during electric actuation and ventilates the same during non-actuation,
wherein the actuator (3) moves the on/off valve (2), when applied with compressed air (10), into one of the on/off positions and when ventilated into the other of the on/off positions and
wherein the function monitoring device (13) is embodied to detect at least one parameter which refers to the movement of the on/off valve (2),
**characterised in that** the function monitoring device (13) has a magnetic field sensor (15) which detects changes to a magnetic field, said magnetic field sensor being arranged in the region of the magnetic valve (9) in order to detect the change to a magnetic field of the magnetic valve (9), and generating a signal awakening the function monitoring device (13) in order to detect the at least one parameter.

2. Arrangement according to claim 1, **characterised in that** the function monitoring device (13) comprises a pressure sensor (19), which detects the pneumatic pressure in the actuator (3) as the parameter which refers to the movement of the on/off valve (2).

3. Arrangement according to claim 1 or 2, **characterised in that** the function monitoring device (13) comprises a vibration sensor (16), which detects vibrations of the field device (1) as the parameter which refers to the movement of the on/off valve (2).

4. Arrangement according to one of the preceding claims, **characterised in that** the function monitoring device (13) has means (23, 24) for storing measured values of the detected parameter and means, in particular a radio interface (17), for transmitting the measured values to a remote point (21).

5. Arrangement according to claim 4, **characterised in that** the remote point is embodied to evaluate the measured values of the detected parameter.

6. Arrangement according to one of claims 1 to 3, **characterised in that** the function monitoring device (13) has means (20) for evaluating measured values of the detected parameter and means, in particular a radio interface (17), for transmitting the result of the evaluation to a remote point (21) .

7. Arrangement according to one of the preceding claims, **characterised in that** the function monitoring device (13) has means for self-supply, in particular a battery (32) or solar cell.

8. Arrangement according to one of the preceding claims, **characterised in that** the function monitoring device (13) has a housing (14) for detachable assembly on the on/off valve (2) or pneumatic actuator (3).

## Revendications

1. Agencement comprenant un appareil (1) de champ ayant une soupape (2) d'ouverture/fermeture, un servomoteur (3) pneumatique et une électrovanne (9) et un dispositif (13) de contrôle de fonction,
dans lequel l'électrovanne (9) est, lorsque le servomoteur (3) est commandé électriquement, alimenté en air (10) comprimé, et est purgé lorsqu'il n'est pas commandé,
dans lequel le servomoteur (3) met la soupape (2) d'ouverture/fermeture, lors de l'alimentation par de l'air (10) comprimé, dans l'une des positions d'ouverture/fermeture et, lors de la purge, dans l'autre des positions d'ouverture/fermeture et dans lequel le dispositif (13) de contrôle de fonction est constitué pour relever au moins un paramètre caractérisant le déplacement de la soupape (2) d'ouverture/fermeture,
**caractérisé en ce que** le dispositif (13) de contrôle de fonction a un capteur (15) de champ magnétique, qui détecte des modifications d'un champ magnétique, qui est disposé dans la partie de l'électrovanne (9) pour la détection de la variation du champ magnétique de l'électrovanne (9) et qui produit un signal réveillant le dispositif (13) de contrôle de fonction pour la détection du au moins un paramètre.

2. Agencement suivant la revendication 1, **caractérisé en ce que** le dispositif (13) de contrôle de fonction comprend un capteur (19) de pression qui détecte la pression pneumatique dans le cerveau moteur (3) comme paramètre caractérisant le déplacement de la soupape (2) d'ouverture/fermeture.

3. Agencement suivant la revendication 1 ou 2, **caractérisé en ce que** le dispositif (13) de contrôle de fonction comprend un capteur (16) de vibrations, qui détecte des vibrations de l'appareil (1) de champ comme paramètre caractérisant le déplacement de la soupape (2) d'ouverture/fermeture.

4. Agencement suivant l'une des revendications précédentes, **caractérisé en ce que** le dispositif (13) de contrôle de fonction a des moyens (23, 24) de mise en mémoire de valeurs de mesure du paramètre détecté et des moyens, notamment une interface (17) radio, de transmission des valeurs de mesure à un endroit (21) éloigné.

5. Agencement suivant la revendication 4, **caractérisé en ce que** le point éloigné est constitué pour l'exploitation des valeurs de mesure du paramètre détecté.

6. Agencement suivant l'une des revendications 1 à 3, **caractérisé en ce que** le dispositif (13) de contrôle de fonctions a des moyens (20) d'exploitation de valeurs du paramètre détecté et des moyens, notamment une interface (17) radio, de transmission des résultats de l'exploitation a un endroit (21) éloigné.

7. Agencement suivant l'une des revendications précédentes, **caractérisé en ce que** le dispositif (13) de contrôle de fonction a des moyens pour sa propre alimentation, notamment une batterie (32) ou une pile solaire.

8. Agencement suivant l'une des revendications précédentes, **caractérisé en ce que** le dispositif (13) de contrôle de fonction a un boîtier (14) de montage amovible sur la soupape (2) d'ouverture/fermeture ou sur le servomoteur (3) pneumatique.
